# EUROPÄISCHE PATENTSCHRIFT

(11) **EP 1 651 469 B1**
(45) Veröffentlichungstag und Bekanntmachung des Hinweises auf die Patenterteilung: **21.11.2007**
(21) Anmeldenummer: 05742736.1
(22) Anmeldetag: 14.05.2005
(51) Int. Cl.: B60R 11/04

(54) **KAMERAANORDNUNG FÜR EIN KRAFTFAHRZEUG**
CAMERA ARRANGEMENT FOR A MOTOR VEHICLE
SYSTEME CAMERA D'UN VEHICULE AUTOMOBILE

(30) Priorität: 19.05.2004 DE 102004024735
(43) Veröffentlichungstag der Anmeldung: 03.05.2006
(73) Patentinhaber: Leopold Kostal GmbH & Co. KG, 58507 Lüdenscheid (DE)
(72) Erfinder: NEUMANN, Carsten, 44137 Dortmund (DE); BOEHNE, Gregor, 44575 Castrop-Rauxel (DE)
(86) Internationale Anmeldenummer: PCT/EP2005/005307
(87) Internationale Veröffentlichungsnummer: WO 2005/113293

(56) Entgegenhaltungen:
- EP-A- 0 601 873
- EP-A- 1 389 565
- DE-C1- 19 647 200

## Beschreibung

Die vorliegende Erfindung betrifft eine Kameraanordnung für ein Kraftfahrzeug, mit einer auf eine Fahrzeugscheibe gerichteten Kamera, die mit der Fahrzeugscheibe verbunden ist, wobei zwischen Kameraobjektiv und Fahrzeugscheibe ein Lichtleitkörper angeordnet ist, der aus mindestens zwei unterschiedlichen, festen und optisch transparenten Materialien besteht.

Als "fest" wird hier und im Folgenden jedes Material bezeichnet, das ohne abdichtende Umhüllung den Raum zwischen Fahrzeugscheibe und Kameraoptik ausfüllen kann, z. B. ein kristalliner oder amorpher Festkörper, ein Glas oder ein Gelee. Als "optisch transparent" wird hier und im folgenden jedes Material bezeichnet, das zumindest über einen Teilbereich des Wellenlängenspektrums, für das die Kamera sensitiv ist, eine für die Kamera ausreichend hohe Transmission aufweist.

Eine derartige Kameraanordnung ist aus der deutschen Offenlegungsschrift DE 196 47 200 C1 bekannt, wobei die Kamera als ein CCD-Kamerasystem beschrieben ist, das über einen Optikkörper und ein Silikonkissen optisch an eine Fahrzeugscheibe angekoppelt ist.

Die Kameraanordnung mit einem innerhalb eines Gehäuses angeordneten Kamerachip ist dabei relativ großbauend. Um einen kompakteren Aufbau zu erhalten, müsste der Optikkörper relativ stark lichtbrechende Eigenschaften aufweisen, also eine Linse oder ein Prisma ausbilden. Hierbei ergibt sich das Problem, dass es aufgrund der optischen Dispersion, also der Wellenlängenabhängigkeit der Brechungseigenschaften, Farbfehler, bzw. bei Kamerasystemen, die Graustufen erfassen, unscharfe Abbildungen entstehen.

Es bestand daher die Aufgabe, eine Kameraanordnung für ein Kraftfahrzeug zu schaffen, welche einen besonders kompakten Aufbau mit guten optischen Eigenschaften verbindet.

Diese Aufgabe wird erfindungsgemäß dadurch gelöst, dass wenigstens zwei Bereiche des Lichtleitkörpers unterschiedliche optische Eigenschaften aufweisen und zusammen eine achromatisch wirkende Prismenkombination ausbilden.

Diese erfindungsgemäße Lösung ermöglicht auf einfache und kostengünstige Weise, eine besonders kompakte Kameraanordnung mit ausgezeichneten optischen Eigenschaften zu schaffen. Hierbei wird durch die brechenden Eigenschaften eines Lichtleitkörpermaterials eine Verringerung des Bauraumes erzielt, während das zweite Lichtleitkörpermaterial so gewählt ist, dass es die durch optische Dispersion innerhalb des ersten Lichtleitkörpermaterials entstehenden Farbfehler weitgehend kompensiert.

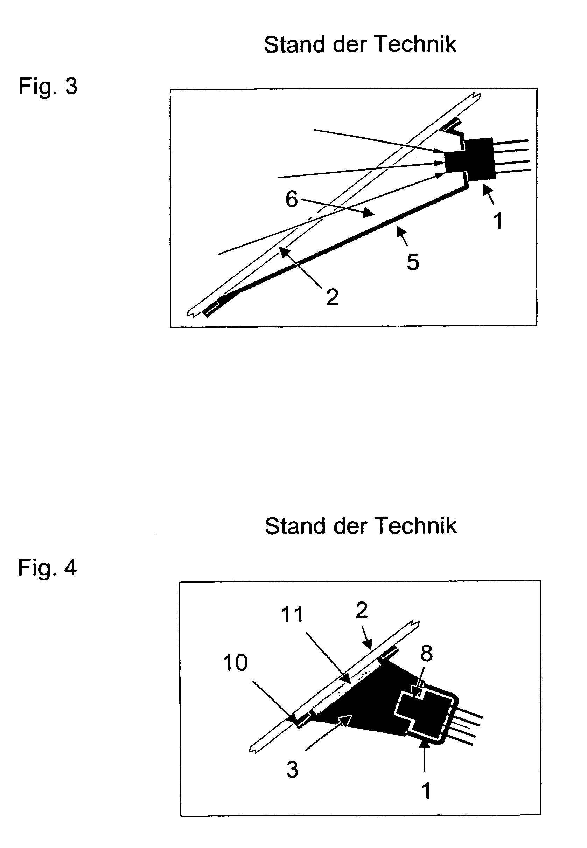

Im Folgenden werden zwei Ausführungsbeispiele der Erfindung anhand der Prinzipskizzen 1 und 2 dargestellt und näher erläutert. Die Figur 3 und 4 zeigen zum Vergleich jeweils eine Kameraanordnung nach dem Stand der Technik. In den Ausführungsbeispielen sind gleiche oder gleichwirkende Elemente jeweils mit den gleichen Bezugszeichen bezeichnet.

Anhand der Figur 3 soll zunächst der prinzipielle Aufbau einer Kameraanordnung, wie sie beispielsweise aus der DE 102 09 615 A1 bekannt ist, kurz erläutert werden.

Eine an der Innenseite einer Fahrzeugscheibe (2) angeordnete Kamera (1) soll durch die Fahrzeugscheibe (2) hindurch ein Bild des Außenraums aufnehmen. Der Begriff "Kamera" kann hierbei jede Art von ortsauflösendem optischen Sensor bezeichnen, insbesondere auch einen mehrere optische Meßelemente enthaltenden CCD- oder CMOS-Sensor.

Die Kamera (1) ist mittels eines Koppelelements (5) mit der Fahrzeugscheibe (2) verbunden, wobei das Koppelelement (5) einen Hohlkörper mit vorzugsweise lichtundurchlässigen Wänden ausbildet. Das Koppelelement (5) erfüllt damit die Aufgabe, Schmutz und Streulicht von der Kamera (1) fernzuhalten.

Die Fahrzeugscheibe (2) wird in der Mehrzahl der Fälle identisch mit der Windschutzscheibe des Fahrzeugs sein, welche insbesondere in Personenkraftwagen zumeist eine deutlich schräge Anbaulage einnimmt. Da im Allgemeinen eine nahezu waagerechte Blickrichtung der Kamera (1) vorgesehen ist, ergibt sich die Schwierigkeit, dass das Koppelelement (5), soweit es den Aufnahmebereich der Kamera (1) nicht wesentlich einschränken soll, zumindest in seinem unteren Aufnahmebereich eine recht große Außenfläche und auch ein relativ großes Innenvolumen (6) aufweisen muß. Ein großbauendes Koppelelement (5) ist aber aus praktischen Gründen unerwünscht.

Problematisch ist außerdem, dass zum Schutz vor Beschlagbildung nach dem Stand der Technik vorgesehen ist, den durch das Koppelelement (5) aufgespannten Raum (6) beispielsweise mit einer eigenen Atmosphäre zu versehen. Hierdurch entstehen schwer zu erfüllende Anforderungen hinsichtlich der notwendigen Dichtheit des Koppelelements (5) und auch hinsichtlich der angestrebten Lebensdauer, sowie ein hoher Aufwand bei der Montage.

Die Nachteile dieser vorbekannten Kameraanordnung führten zu der Überlegung, in den Raum zwischen Kameraobjektiv und Fahrzeugscheibe einen aus einem Feststoff bestehenden Lichtleitkörper einzubringen.

Der im vorgenannten Stand der Technik durch das Koppelelement (5) ausgebildete Hohltubus wird gemäß einer weiteren bekannten Ausführung, skizziert in der Figur 4, durch einen Lichtleitkörper (3) aus Glas oder Kunststoff ersetzt, der den relativ großen Innenraum (6) der Hohltubus-Lösung auf einen für die Kamera (1) gerade noch ausreichenden Kameraraum (8) reduziert, welcher Teile der Kamera (1) aufnimmt, wodurch die Kamera (1) mit dem Lichtleitkörper (3) verbindbar ist.

Die Verbindung zwischen Lichtleitkörper (3) und Fahrzeugscheibe (2) erfolgt hier mittels Befestigungselemente (10), die sich außerhalb des Kameragesichtsfeldes befinden. Durch die außerhalb des Gesichtsfelds liegende Befestigung ist zusätzlich ein elastisches und optisch transparentes Verbindungselement (11), z. B. durch ein Gelpack, ausgeführt als Einzelteil oder mit dem Lichtleitkörper (3) verbunden, notwendig, welches die der Fahrzeugscheibe (2) innewohnenden Toleranzen überbrückt und so den optischen Schluss zum Lichtleitkörper (3) herstellt.

Eine vergleichbare Kameraanordnung ist aus der deutschen Offenlegungsschrift DE 196 47 200 C1 bekannt, wobei die Kamera als ein CCD-Kamerasystem beschrieben ist, das über einen Optikkörper und ein Silikonkissen optisch an eine Fahrzeugscheibe angekoppelt ist. Der Optikkörper hat hierbei eine lichtleitende Funktion und das Silikonkissen dient dazu, den Optikkörper möglichst reflexionsfrei an die Fahrzeugscheibe anzukoppeln, indem es Lufteinschlüsse verhindert, die abrupte Änderungen des Brechungsindexes bewirken.

Aus den lichtbrechenden Eigenschaften des Lichtleitkörpers ergibt sich -speziell bei stark geneigten Fahrzeugscheiben, der Vorteil einer deutlich verringerten Größe des erforderlichen Anbauraumes. Als Nachteile ergeben sich aufgrund der Prismenwirkung des Lichtleitkörpers prinzipbedingt chromatische (Farbfehler) und geometrische Aberrationen (Verzeichnungen), woraus ein Auflösungsverlust resultiert.

Als optische Lösung zur Vermeidung von Farbfehlern ist eine Einengung des nutzbaren Wellenlängenbereichs über eine Filterung des einfallenden Lichtes denkbar. Durch eine solche Filterung verringert sich aber die Lichtstärke der Optik beträchtlich.

Erfindungsgemäß ist die Kompensation der Dispersion über einen ausreichenden Wellenlängenbereich vorgesehen, da hierdurch vorteilhafterweise die Lichtstärke der Optik erhalten bleibt. Im Idealfall können hierdurch Farbfehler bis unterhalb der Wahrnehmungsgrenze der Kamera verringert werden.

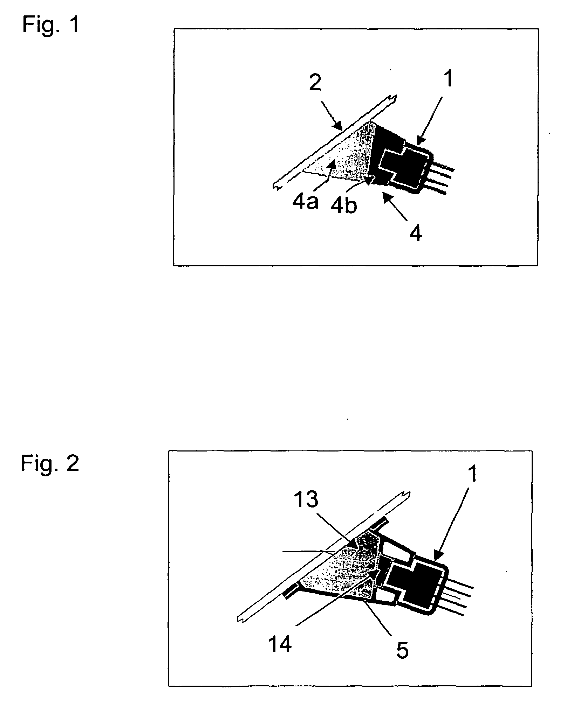

Hierzu ist vorgesehen, dass ein Lichtleitkörper (4) wenigstens zwei Bereiche (4a, 4b) mit unterschiedlichen optischen Eigenschaften aufweist und die beiden Bereiche (4a, 4b) zusammen eine achromatisch wirkende Prismenkombination ausbilden, wie in der Figur 1 schematisch dargestellt. Der erste Bereich (4a) bricht die einfallenden Strahlen und ermöglicht damit eine verringerte Größe des Lichtleitkörpers (4). Der zweite Bereich (4b) kompensiert die entstandenen Farbfehler.

Zur Realisierung kann eine Kombination zweier geeigneter Materialien mit unterschiedlichen Brechungsindizes nach dem Flint-/Kronglas-Prinzip eingesetzt werden. Beide Stoffe sollen sich kostengünstig in einer Serienproduktion verarbeiten lassen, also vorzugsweise gieß- oder spritzgußfähig sein. Das Gesamtmodul kann wiederum durch Klebung oder über außen liegende Befestigungspunkte an der Fahrzeugscheibe montiert sein.

Um einen massiven Lichtleitkörper mit seinen spritzgußtechnischen Problemen in Bezug auf Materialanhäufungen zu vermeiden, bietet sich der in der Figur 2 dargestellte Aufbau an: ein als Hohlkörper ausgebildetes Koppelelement (5), welches die Kamera (1) mit der Fahrzeugscheibe (2) verbindet, ist mit einer optisch transparenten, aushärtbaren Masse ausgefüllt, im Folgenden Vergussmasse (13) genannt, die in ihrer Funktion ein Lichtleitkörper ist.

Um die chromatischen Aberrationen zu korrigieren, bietet sich an, die Vergussmasse (13) als brechendes Medium und das ohnehin vorhandene Koppelelement (5) als optisch wirksames Korrekturelement (14) zu nutzen, wie in der Figur 2 skizziert.

Der mehrteilige Lichtleitkörper (4) kann alternativ auch durch Verwendung mehrerer unterschiedlicher Vergussmassen realisiert sein. Hierbei sind die Grenzflächen zwischen den optisch wirksamen Medien (13, 14), soweit nicht durch äußere Formen (z. B. durch die Form der Fahrzeugscheibe) eingeschränkt, frei gestaltbar.

### Bezugszeichen

- 1: Kamera
- 2: Fahrzeugscheibe
- 3: Lichtleitkörper
- 4: zweiteiliger Lichtleitkörper
- 4a, 4b: erster und zweiter Teil (des zweiteiligen Lichtleitkörpers)
- 5: Koppelelement
- 6: Innenvolumen (aufgespannter Raum)
- 8: Kameraraum
- 10: Befestigungselemente
- 11: transparentes Verbindungselement
- 13: Vergussmasse (1. optisch wirksames Medium)
- 14: Korrekturelement (2. optisch wirksames Medium)

## Patentansprüche

1. Kameraanordnung für ein Kraftfahrzeug, mit einer auf eine Fahrzeugscheibe gerichteten Kamera, die mit der Fahrzeugscheibe verbunden ist, wobei zwischen Kameraobjektiv und Fahrzeugscheibe ein Lichtleitkörper angeordnet ist, der aus mindestens zwei unterschiedlichen, festen und optisch transparenten Materialien besteht,
**dadurch gekennzeichnet,**
**dass** wenigstens zwei Bereiche (4a, 4b) des Lichtleitkörpers (4) unterschiedliche optische Eigenschaften aufweisen und zusammen eine achromatisch wirkende Prismenkombination ausbilden.

2. Kameraanordnung nach Anspruch 1, **dadurch gekennzeichnet, dass** die beiden Bereiche (4a, 4b) aneinander anliegend oder miteinander verbunden angeordnet sind.

3. Kameraanordnung nach Anspruch 1, **dadurch gekennzeichnet, dass** ein Koppelelement (5) vorgesehen ist, welches einen Hohlkörper ausbildet, der den Lichtleitkörper teilweise umschließt.

4. Kameraanordnung nach Anspruch 3, **dadurch gekennzeichnet, dass** das Koppelelement (5) mit mindestens einer den Lichtleitkörper ausbildenden, optisch transparenten, aushärtbaren Vergussmasse (13) ausgefüllt ist.

5. Kameraanordnung nach Anspruch 4, **dadurch gekennzeichnet, dass** mindestens eine Vergussmasse (13) ein Weichelastomer ist.

6. Kameraanordnung nach Anspruch 1, **dadurch gekennzeichnet, dass** der Lichtleitkörper optisch wirksame Bereiche als Bildkorrekturelemente (14) ausbildet.

7. Kameraanordnung nach Anspruch 1, **dadurch gekennzeichnet, dass** das Koppelelement (5) und/oder der Lichtleitkörper (4) mit der Fahrzeugscheibe (2) verklebt ist.

8. Kameraanordnung nach Anspruch 1, **dadurch gekennzeichnet, dass** das Koppelelement (5) an der Fahrzeugscheibe (2) mittels einer lösbaren mechanischen Verbindung (10) angefügt ist.

## Claims

1. Camera configuration for a motor vehicle with a camera which is aimed at a window pane of the motor vehicle and is connected to the window pane of the motor vehicle, wherein a fibre-optic element is arranged between the camera lens and the window pane of the motor vehicle consisting of at least two different solid and optically transparent materials
**characterised by the fact**
that at least two zones (4a, 4b) of the fibre-optic element (4) show different optical characteristics and together constitute a prismatic combination with an achromatic effect.

2. Camera configuration in accordance with Claim 1, **characterised by** the fact that the two zones (4a, 4b) are arranged adjacent to each other or are connected to each other.

3. Camera configuration in accordance with Claim 1, **characterised by** the fact that a coupling element (5) is provided which constitutes a hollow body that partially encompasses the fibre-optic element.

4. Camera configuration in accordance with Claim 3, **characterised by** the fact that the coupling element (5) is filled with at least one optically transparent, hardenable filling compound (13), constituting the fibre-optic element.

5. Camera configuration in accordance with Claim 4, **characterised by** the fact that at least one filling compound (13) is a flexible elastomer.

6. Camera configuration in accordance with Claim 1, **characterised by** the fact that the fibre-optic element constitutes optically operative zones as image compensating elements (14).

7. Camera configuration in accordance with Claim 1, **characterised by** the fact that the coupling element (5) and/or the fibre-optic element (4) is glued to the window pane (2) of the motor vehicle.

8. Camera configuration in accordance with Claim 1, **characterised by** the fact that the coupling element (5) is attached to the window pane (2) of a motor vehicle by means of a detachable mechanical connection (10).

## Revendications

1. Système de caméra pour un véhicule automobile, avec une caméra qui, dirigée vers une glace du véhicule automobile, est reliée à ladite glace du véhicule automobile, système dans lequel, entre l'objectif de la caméra et la glace du véhicule automobile, est agencé un guide de lumière qui consiste en au moins deux différents matériaux solides et optiquement transparents.
**caractérisé en ce que**
deux régions (4a, 4b) du guide de lumière (4) au moins présentent des propriétés optiques et forment en commun une combinaison prismatique qui agit de manière achromatique.

2. Système de caméra selon la revendication 1, **caractérisé en ce que** les deux régions (4a, 4b) sont agencées l'une contre l'autre ou reliées l'une à l'autre.

3. Système de caméra selon la revendication 1, **caractérisé en ce qu'**est prévu un élément de couplage (5) qui présente la forme d'un corps creux qui entoure partiellement le guide de lumière.

4. Système de caméra selon la revendication 3, **caractérisé en ce que** l'élément de couplage (5) est rempli avec au moins une masse de remplissage (13) apte au durcissement, optiquement transparente, qui forme le guide de lumière.

5. Système de caméra selon la revendication 4, **caractérisé en ce qu'**au moins une masse de remplissage (13) est un élastomère mou.

6. Système de caméra selon la revendication 1, **caractérisé en ce que** le guide de lumière forme des régions optiquement actives en tant qu'éléments de correction d'images (14).

7. Système de caméra selon la revendication 1, **caractérisé en ce que** l'élément de couplage (5) et / ou le guide de lumière (4) est / sont collé/s sur la glace (2) du véhicule automobile.

8. Système de caméra selon la revendication 1, **caractérisé en ce que** l'élément de couplage (5) est relié 'à la glace (2) du véhicule automobile au moyen d'une liaison mécanique amovible (10).
